# EUROPEAN PATENT APPLICATION

(11) **EP 4 266 622 A1**
(43) Date of publication of application: **25.10.2023**
(21) Application number: 21916887.9
(22) Date of filing: 11.01.2021
(51) Int. Cl.: H04L 7/00, H04L 7/027

(54) **CLOCK SYNCHRONIZATION METHOD AND COMMUNICATION DEVICE**

(71) Applicant: Huawei Technologies Co., Ltd., Shenzhen, Guangdong 518129 (CN)
(72) Inventor: HU, Zhaoyu, Shenzhen, Guangdong 518129 (CN); CHEN, Weimin, Shenzhen, Guangdong 518129 (CN); WEI, Juan, Shenzhen, Guangdong 518129 (CN); ZHANG, Xu, Shenzhen, Guangdong 518129 (CN)
(74) Representative: Epping - Hermann - Fischer
(86) International application number: PCT/CN2021/071097
(87) International publication number: WO 2022/147833

(57) **Abstract**

A clock synchronization method and a communication apparatus are provided. The method includes: multiplexing a local analog clock signal and a first data signal to obtain a first multiplexed signal; sending the first multiplexed signal to a first apparatus; receiving a second multiplexed signal from the first apparatus; demultiplexing the second multiplexed signal to obtain a second data signal and a first analog clock signal, where the first analog clock signal is the local analog clock signal that goes through a transmission delay; obtaining a first signal based on the first analog clock signal, where the first signal is a delay compensation amount or a second analog clock signal, and the second analog clock signal is the local analog clock signal obtained through delay compensation; and processing data based on the first signal to obtain the first data signal obtained through delay compensation. This can improve precision of clock synchronization.

## Description

### TECHNICAL FIELD

This application relates to the communication field, and more specifically, to a clock synchronization method and a communication apparatus.

### BACKGROUND

In a distributed multiple-input multiple-output (distributed multiple-input multiple-output, D-MIMO) system, a higher channel space resolution can be obtained based on remote distribution of radio equipment (radio equipment, RE) relative to a radio equipment control (radio equipment control, REC), thereby improving a system capacity and user experience. For example, the REC may be a baseband processing unit (baseband unit, BBU), and the RE may be a remote radio unit (remote radio unit, RRU). In the D-MIMO system, clock synchronization between the REC and the RE is a basis for ensuring communication quality. Currently, clock synchronization between the REC and the RE is mainly based on a digital clock synchronization manner of a timestamp, that is, synchronization is performed in a manner in which the timestamp is carried in a digital signal for transmission. However, due to the uncertainty of a delay of loading and unloading the timestamp, a deviation of clock synchronization between the REC and the RE is caused. Currently, precision of clock synchronization makes a system unable to meet service requirements of some communication services with higher quality. Therefore, how to improve the precision of clock synchronization is a hot topic of current research.

### SUMMARY

Embodiments of this application provide a clock synchronization method and a communication apparatus, to improve precision of clock synchronization.

According to a first aspect, a clock synchronization method is provided. The method may be performed by a communication device or a module (such as a chip) configured in (or used in) the communication device.

The method includes: multiplexing a third analog clock signal and a first data signal to obtain a first multiplexed signal; sending the first multiplexed signal to a first apparatus; receiving a second multiplexed signal from the first apparatus; demultiplexing the second multiplexed signal to obtain a second data signal and a first analog clock signal, where the first analog clock signal is the third analog clock signal that goes through a transmission delay; obtaining a first signal based on the first analog clock signal, where the first signal is a delay compensation amount or a second analog clock signal, and the second analog clock signal is the third analog clock signal obtained through delay compensation; and processing data based on the first signal to obtain the first data signal by performing delay compensation.

According to the foregoing solution, the second apparatus combines an analog signal and a data signal of a local analog clock signal, and sends the combined analog signal and the data signal to the first apparatus. A receiving apparatus multiplexes the analog signal and the data signal of a received clock signal, and feeds back the multiplexed analog signal and the data signal to the second apparatus, so that the second apparatus can determine a path delay based on a clock signal fed back by the first apparatus, and perform delay processing on the data signal sent to the first apparatus. Therefore, the data signal is synchronized with a clock of the second apparatus when arriving at the first apparatus. This can reduce a deviation of clock synchronization caused by uncertainty of a delay of loading and unloading a digital timestamp, and improve precision of clock synchronization.

With reference to the first aspect, in some implementations of the first aspect, the sending the first multiplexed signal to a first apparatus includes: modulating the first multiplexed signal to an optical carrier to obtain a first optical signal; and sending the first optical signal to the first apparatus, where the first optical signal includes the first multiplexed signal. The receiving a second multiplexed signal from the first apparatus includes: receiving a second optical signal from the first apparatus, where the second optical signal includes the second multiplexed signal; and demodulating the second optical signal to obtain the second multiplexed signal.

According to the foregoing solution, the first multiplexed signal may be transmitted to a remote end through an optical fiber, to maximize integrity of a clock signal during transmission, thereby ensuring high-quality recovery of a clock at the remote end and ensuring stability of the clock. With reference to the first aspect, in some implementations of the first aspect, the multiplexing a third analog clock signal and a first data signal to obtain a first multiplexed signal includes: performing time division multiplexing on the third analog clock signal and the first data signal to obtain the first multiplexed signal.

According to the foregoing solution, a local analog clock signal and data are multiplexed and then transmitted, so that a transmission path delay of a service can be accurately measured without affecting normal running of the service.

With reference to the first aspect, in some implementations of the first aspect, the performing time division multiplexing on the third analog clock signal and the first data signal to obtain the first multiplexed signal includes: when a first switching switch is controlled to switch to a first state, the first multiplexed signal output by the first switching switch includes the first data signal; or when the first switching switch is controlled to switch to a second state, the first multiplexed signal output by the first switching switch includes the third analog clock signal.

With reference to the first aspect, in some implementations of the first aspect, the demultiplexing the second multiplexed signal to obtain a second data signal and a first analog clock signal includes: performing time division demultiplexing on the second multiplexed signal, and outputting the second data signal and the first analog clock signal.

With reference to the first aspect, in some implementations of the first aspect, the performing time division demultiplexing on the second multiplexed signal, and outputting the second data signal and the first analog clock signal includes: when a second switching switch is controlled to switch to a third state, outputting, by the second switching switch, the second data signal in the second multiplexed signal; or when the second switching switch is controlled to switch to a fourth state, outputting, by the second switching switch, the first analog clock signal in the second multiplexed signal.

With reference to the first aspect, in some implementations of the first aspect, the multiplexing a third analog clock signal and a first data signal to obtain a first multiplexed signal includes: performing frequency division multiplexing on the third analog clock signal and the first data signal to output the first multiplexed signal; and/or the demultiplexing the second multiplexed signal to obtain a second data signal and a first analog clock signal includes: performing frequency division demultiplexing on the second multiplexed signal, and outputting the second data signal and the first analog clock signal.

According to the foregoing solution, a local analog clock signal and data are multiplexed and then transmitted, so that a transmission path delay of a service can be accurately measured without affecting normal running of the service.

With reference to the first aspect, in some implementations of the first aspect, the performing delay compensation on the third analog clock signal based on the first analog clock signal, and outputting the first signal includes: determining the delay compensation amount between the first analog clock signal and the third analog clock signal in a symmetric dual mixer time difference measurement manner.

According to the foregoing solution, precision of delay measurement can be improved by using the symmetric dual mixer time difference measurement manner.

According to a second aspect, a clock synchronization method is provided. The method may be performed by a communication device or a module (such as a chip) configured in (or used in) the communication device.

The method includes: receiving a first multiplexed signal from a second apparatus; demultiplexing the first multiplexed signal to obtain a first data signal and a fourth analog clock signal; multiplexing the fourth analog clock signal and a second data signal to obtain a second multiplexed signal; and sending the second multiplexed signal to the second apparatus.

With reference to the second aspect, in some implementations of the second aspect, the receiving a first multiplexed signal from a second apparatus includes: receiving a first optical signal from the second apparatus, where the first optical signal includes the first multiplexed signal; and demodulating the first optical signal to obtain the first multiplexed signal. The sending the second multiplexed signal to the second apparatus includes: modulating the second multiplexed signal to an optical carrier to obtain a second optical signal; and sending the second optical signal to the second apparatus, where the second optical signal includes the second multiplexed signal.

With reference to the second aspect, in some implementations of the second aspect, the multiplexing the fourth analog clock signal and a second data signal to obtain a second multiplexed signal includes: performing time division multiplexing on the fourth analog clock signal and the second data signal, and outputting the second multiplexed signal.

With reference to the second aspect, in some implementations of the second aspect, the performing time division multiplexing on the fourth analog clock signal and the second data signal, and outputting the second multiplexed signal includes: when a third switching switch is controlled to switch to a first state, the second multiplexed signal output by the third switching switch includes the second data signal; or when the third switching switch is controlled to switch to a second state, the second multiplexed signal output by the third switching switch includes the fourth analog clock signal.

With reference to the second aspect, in some implementations of the second aspect, the demultiplexing the first multiplexed signal to obtain a first data signal and a fourth analog clock signal includes: performing time division demultiplexing on the first multiplexed signal to obtain the first data signal and the fourth analog clock signal.

With reference to the second aspect, in some implementations of the second aspect, the performing time division demultiplexing on the first multiplexed signal to obtain the first data signal and the fourth analog clock signal includes: when a fourth switching switch is controlled to switch to a third state, outputting, by the fourth switching switch, the first data signal in the first multiplexed signal; or when the fourth switching switch switches to a fourth state, outputting, by the fourth switching switch, the fourth analog clock signal in the first multiplexed signal.

With reference to the second aspect, in some implementations of the second aspect, the demultiplexing the first multiplexed signal to obtain a first data signal and a fourth analog clock signal includes: performing frequency division demultiplexing on the first multiplexed signal, and outputting the first data signal and the fourth analog clock signal. The multiplexing the fourth analog clock signal and a second data signal to obtain a second multiplexed signal includes: performing frequency division multiplexing on the fourth analog clock signal and the second data signal, and outputting the second multiplexed signal.

According to a third aspect, a clock synchronization apparatus is provided, where the clock synchronization apparatus includes a combiner module, an oscillator, a clock synchronization module a data processing module, a splitter module, and a transceiver module. The combiner module is configured to combine a third analog clock signal from the oscillator and a first data signal from the data processing module to obtain a first multiplexed signal, and output the first multiplexed signal to the transceiver module. The transceiver module is configured to send the first multiplexed signal to a first apparatus. The transceiver module is further configured to receive a second multiplexed signal from the first apparatus, and output the second multiplexed signal to the splitter module. The splitter module is configured to split the second multiplexed signal to obtain a second data signal and a first analog clock signal, and output the first analog clock signal to the clock synchronization module, where the first analog clock signal is the third analog clock signal that goes through a transmission delay. The clock synchronization module is configured to obtain a first signal based on the first analog clock signal and the third analog clock signal from the oscillator, and output the first signal to the data processing module, where the first signal is a second analog clock signal or a delay compensation amount between the first analog clock signal and the third analog clock signal, and the second analog clock signal is the third analog clock signal obtained through delay compensation. The data processing module is configured to process data based on the first signal to obtain the first data signal by performing delay compensation. With reference to the third aspect, in some implementations of the third aspect, the transceiver module includes an electro-optic modulation unit, a photoelectric detection unit, and a transceiver unit. That the transceiver module is configured to send the first multiplexed signal to a first apparatus includes: The electro-optic modulation unit is configured to modulate the first multiplexed signal to an optical carrier to obtain a first optical signal, and output the first optical signal to the transceiver unit; and the transceiver unit is configured to send the first optical signal to the first apparatus, where the first optical signal includes the first multiplexed signal. That the transceiver module is further configured to receive a second multiplexed signal from the first apparatus includes: The transceiver unit is further configured to receive a second optical signal from the first apparatus, where the second optical signal includes the second multiplexed signal; and the photoelectric detection unit is configured to demodulate the second optical signal to obtain the second multiplexed signal.

With reference to the third aspect, in some implementations of the third aspect, the combiner module is specifically configured to perform time division multiplexing on the third analog clock signal and the first data signal, and output the first multiplexed signal.

With reference to the third aspect, in some implementations of the third aspect, the combiner module includes a first switching switch. When the first switching switch switches to a first state, the first multiplexed signal output by the first switching switch includes the first data signal. Alternatively, when the first switching switch switches to a second state, the first multiplexed signal output by the first switching switch includes the third analog clock signal.

With reference to the third aspect, in some implementations of the third aspect, the splitter module is specifically configured to perform time division demultiplexing on the second multiplexed signal, and output the second data signal and the first analog clock signal.

With reference to the third aspect, in some implementations of the third aspect, the splitter module includes a second switching switch. When the second switching switch switches to a third state, the second switching switch outputs the second data signal in the second multiplexed signal to the data processing module. Alternatively, when the second switching switch switches to a fourth state, the second switching switch outputs the first analog clock signal in the second multiplexed signal to the clock synchronization module.

With reference to the third aspect, in some implementations of the third aspect, the combiner module is specifically configured to perform frequency division multiplexing on the third analog clock signal and the first data signal, and output the first multiplexed signal; and/or the splitter module is specifically configured to perform frequency division demultiplexing on the second multiplexed signal, and output the second data signal and the first analog clock signal.

With reference to the third aspect, in some implementations of the third aspect, the clock synchronization module determines the delay compensation amount between the first analog clock signal and the third analog clock signal in a symmetric dual mixer time difference measurement manner.

According to a fourth aspect, a clock synchronization apparatus is provided, where the clock synchronization apparatus includes: a transceiver module, a splitter module, a combiner module, and a data processing module. The transceiver module is configured to receive a first multiplexed signal from a second apparatus, and output the first multiplexed signal to the splitter module. The splitter module is configured to split the first multiplexed signal to obtain a first data signal and a fourth analog clock signal, and output the fourth analog clock signal to the combiner module. The combiner module is configured to combine the fourth analog clock signal and a second data signal from the data processing module to obtain a second multiplexed signal, and output the second multiplexed signal to the transceiver module. The transceiver module is further configured to send the second multiplexed signal to the second apparatus.

With reference to the fourth aspect, in some implementations of the fourth aspect, the transceiver module includes an electro-optic modulation unit, a photoelectric detection unit, and a transceiver unit. That the transceiver module is configured to receive a first multiplexed signal from a second apparatus includes: The transceiver unit is configured to receive a first optical signal from the second apparatus, where the first optical signal includes the first multiplexed signal; and the photoelectric detection unit is configured to demodulate the first optical signal to obtain the first multiplexed signal. That the transceiver module is further configured to send the second multiplexed signal to the second apparatus includes: The electro-optic modulation unit is configured to modulate the second multiplexed signal to an optical carrier to obtain a second optical signal, and output the second optical signal to the transceiver unit; and the transceiver unit is further configured to send the second optical signal to the second apparatus, where the second optical signal includes the second multiplexed signal.

With reference to the fourth aspect, in some implementations of the fourth aspect, the combiner module is specifically configured to perform time division multiplexing on the fourth analog clock signal and the second data signal, and output the second multiplexed signal.

With reference to the fourth aspect, in some implementations of the fourth aspect, the combiner module includes a third switching switch. When the third switching switch switches to a first state, the second multiplexed signal output by the third switching switch includes the second data signal. Alternatively, when the third switching switch switches to a second state, the second multiplexed signal output by the third switching switch includes the fourth analog clock signal.

With reference to the fourth aspect, in some implementations of the fourth aspect, the splitter module is specifically configured to perform time division demultiplexing on the first multiplexed signal, and output the first data signal and the fourth analog clock signal.

With reference to the fourth aspect, in some implementations of the fourth aspect, the splitter module includes a fourth switching switch. When the fourth switching switch switches to a third state, the fourth switching switch outputs the first data signal in the first multiplexed signal to the data processing module. Alternatively, when the fourth switching switch switches to a fourth state, the fourth switching switch outputs the fourth analog clock signal in the first multiplexed signal to the combiner module.

With reference to the fourth aspect, in some implementations of the fourth aspect, the splitter module is specifically configured to perform frequency division demultiplexing on the first multiplexed signal, and output the first data signal and the fourth analog clock signal; and/or the combiner module is specifically configured to perform frequency division multiplexing on the fourth analog clock signal and the second data signal, and output the second multiplexed signal. According to a fifth aspect, a communication system is provided, including the clock synchronization apparatus according to any one of the third aspect and the clock synchronization apparatus according to any one of the fourth aspect.

### BRIEF DESCRIPTION OF DRAWINGS

FIG. 1 is a schematic block diagram of a communication system according to an embodiment of this application;
FIG. 2 is a schematic flowchart of a clock synchronization method according to an embodiment of this application;
FIG. 3 is a schematic diagram of a structure of a communication apparatus according to an embodiment of this application;
FIG. 4 is a schematic diagram of a structure of a combiner module according to an embodiment of this application;
FIG. 5 is another schematic diagram of a structure of a combiner module according to an embodiment of this application;
FIG. 6 is a schematic diagram of a structure of a splitter module according to an embodiment of this application;
FIG. 7 is another schematic diagram of a structure of a splitter module according to an embodiment of this application;
FIG. 8 is a schematic diagram of a structure of a clock synchronization module according to an embodiment of this application;
FIG. 9 is another schematic diagram of a structure of a clock synchronization module according to an embodiment of this application;
FIG. 10 is another schematic diagram of a structure of a communication apparatus according to an embodiment of this application;
FIG. 11 is still another schematic diagram of a structure of a communication apparatus according to an embodiment of this application;
FIG. 12 is yet another schematic diagram of a structure of a communication apparatus according to an embodiment of this application;
FIG. 13 is still yet another schematic diagram of a structure of a communication apparatus according to an embodiment of this application; and
FIG. 14A and FIG. 14B are another schematic block diagram of a communication system according to an embodiment of this application.

### DESCRIPTION OF EMBODIMENTS

The following describes technical solutions of embodiments in this application with reference to accompanying drawings.

The technical solutions in embodiments of this application may be applied to various communication systems, for example, a long term evolution (long term evolution, LTE) system (including an LTE frequency division duplex (frequency division duplex, FDD) system and an LTE time division duplex (time division duplex, TDD) system), a fifth generation (5th generation, 5G) communication system, a wireless fidelity (wireless fidelity, Wi-Fi) system, and a future mobile communication system (for example, a sixth generation (6th generation, 6G) communication system).

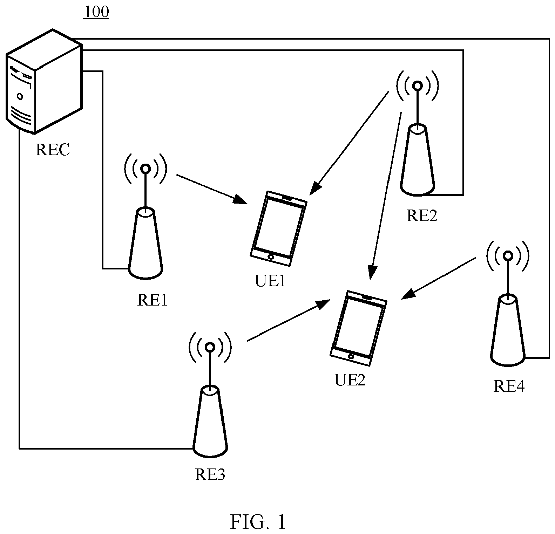

FIG. 1 is a schematic diagram of a communication system 100 applicable to an embodiment of this application.

As shown in FIG. 1, the communication system 100 may include at least one REC, for example, the REC shown in FIG. 1. The communication system 100 may further include at least one RE that can be disposed remotely, for example, an RE1, an RE2, an RE3, and an RE4 shown in FIG. 1. For example, the REC and the RE shown in FIG. 1 may be respectively a BBU and an RRU of a macro base station adopting a distributed base station structure. The REC may transfer a processed baseband signal to the RE, and the RE converts the baseband signal into a radio frequency signal and sends the radio frequency signal. To avoid interference between signals transmitted by different REs, the RE needs to be synchronized with an REC clock, and the REC coordinates time of transmitting signals by different REs.

Currently, clock synchronization between the REC and the RE is mainly based on a digital time synchronization manner of a timestamp, that is, synchronization is performed in a manner in which the timestamp is carried in a digital signal for transmission. However, due to the uncertainty of a delay of loading and unloading the timestamp, a deviation of clock synchronization occurs. In addition, delay measurement in a digital time synchronization manner further depends on a resolution of a sampling clock, that is, a sampling clock frequency. To improve precision of delay measurement, the sampling clock frequency needs to be increased. However, the increase in the sampling clock frequency causes instability of a transmission link, thereby reducing reliability of the communication system.

This application proposes a clock synchronization method. The REC combines a local analog clock signal and a data signal that needs to be sent by the REC to the RE, and sends the combined signal to the RE. Then, the RE multiplexes an analog signal of the received clock signal and the data signal that needs to be sent by the REC to the RE, and feeds back the multiplexed signal to the REC, so that the REC can determine a path delay based on the clock signal fed back by the RE, and perform delay processing on the data signal. Therefore, the data signal sent by the REC to the RE is synchronized with a clock of the REC when arriving at the RE. It should be noted that all transmitted clock signals in this application are analog signals, or referred to as analog clock signals. Compared with digital clock signals, the technical solutions in this application can reduce a clock synchronization deviation caused by an uncertain delay of loading and unloading a digital timestamp, and improve precision of clock synchronization.

The following describes in detail the clock synchronization method provided in this application with reference to the accompanying drawings.

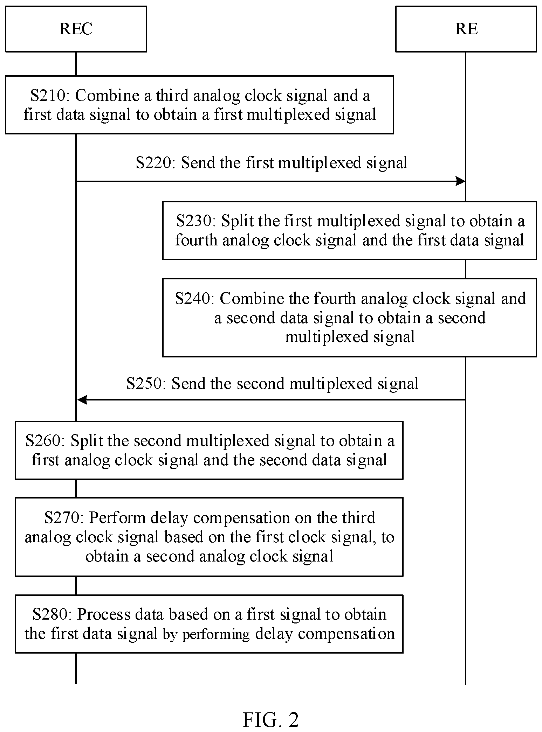

FIG. 2 is a schematic flowchart of the clock synchronization method according to an embodiment of this application.

The clock synchronization method provided in this embodiment of this application may be performed by a communication device or a communication apparatus. In the embodiment in FIG. 2, an example in which clock synchronization is performed by using an REC as a second apparatus and an RE as a first apparatus is used for description. However, this application is not limited thereto. The clock synchronization method may also be applied between two devices that need to be synchronized. For example, a primary clock node and a secondary clock node in a time sensitive network (time sensitive network, TSN) may implement clock synchronization by using the clock synchronization method.

S210: The REC multiplexes a third analog clock signal and a first data signal to obtain a first multiplexed signal.

The third analog clock signal is a local analog clock signal of the REC, that is, a clock signal output by an oscillator of the REC. The first data signal is a data signal to be sent by the REC to the RE. In an implementation, the REC performs time division multiplexing on the local analog clock signal and the first data signal to obtain the first multiplexed signal.

In other words, the first multiplexed signal is the first data signal in one time period, and is the local analog clock signal in another time period. Alternatively, the local analog clock signal periodically appears in the first multiplexed signal, and the local analog clock signal lasts for a period of time in each period.

For example, the REC multiplexes the local analog clock signal in a time interval between two data frames, or predefines a time unit in a data frame as a time unit of the local analog clock signal. However, this application is not limited thereto.

Optionally, the REC may control a first switching switch to multiplex the local analog clock signal and the first data signal.

For example, when the REC may control the first switching switch to switch to a first state, the first multiplexed signal output by the first switching switch includes the first data signal. Alternatively, when the REC controls the first switching switch to switch to a second state, the first multiplexed signal output by the first switching switch includes the local analog clock signal. However, this application is not limited thereto.

In another implementation, the REC performs frequency division multiplexing on the local analog clock signal and the first data signal, and outputs the first multiplexed signal.

For example, the first multiplexed signal has a specific frequency domain bandwidth, and the local analog clock signal and the first data signal are respectively carried on different frequency bands. However, this application is not limited thereto.

S220: The REC sends the first multiplexed signal to the RE.

Correspondingly, the RE receives the first multiplexed signal from the REC.

Optionally, the REC may modulate the first multiplexed signal to an optical carrier to obtain a first optical signal, and send the first optical signal to the RE. The first optical signal includes the first multiplexed signal.

Correspondingly, after receiving the first optical signal, the RE demodulates the first optical signal to obtain the first multiplexed signal.

S230: The RE demultiplexes the first multiplexed signal to obtain a fourth analog clock signal and the first data signal.

The first multiplexed signal received by the RE is the first multiplexed signal that goes through a transmission delay between the REC and the RE, and the fourth analog clock signal is the clock signal obtained after a local analog clock signal of the REC that goes through a transmission delay between the REC and the RE. The fourth analog clock signal is an analog signal.

According to the specific implementation in S210, if the local analog clock signal and the first data signal are multiplexed in a time division multiplexing manner to obtain the first multiplexed signal, the RE performs time division demultiplexing on the first multiplexed signal to obtain the fourth analog clock signal and the first data signal.

Optionally, the RE may control a fourth switching switch to demultiplex the first multiplexed signal to obtain the fourth analog clock signal and the first data signal.

For example, when the RE may control the fourth switching switch to switch to a third state, the fourth switching switch outputs the first data signal in the first multiplexed signal. Alternatively, when the RE controls the fourth switching switch to switch to a fourth state, the fourth switching switch outputs the fourth analog clock signal in the first multiplexed signal. However, this application is not limited thereto.

According to the specific implementation in S210, if the local analog clock signal and the first data signal are multiplexed in a frequency division multiplexing manner to obtain the first multiplexed signal, the RE performs frequency division demultiplexing on the first multiplexed signal to obtain the fourth analog clock signal and the first data signal.

For example, the RE extracts, from the frequency domain bandwidth of the first multiplexed signal, the fourth analog clock signal from a frequency band to which the fourth analog clock signal belongs, and extracts the first data signal from a frequency band to which the first data signal belongs. However, this application is not limited thereto.

S240: The RE multiplexes the fourth analog clock signal and a second data signal to obtain a second multiplexed signal.

The second data signal is a data signal to be sent by the RE to the REC.

In an implementation, the RE performs time division multiplexing on the fourth analog clock signal and the second data signal to obtain the second multiplexed signal.

Optionally, the RE may control a third switching switch to implement multiplexing of the fourth analog clock signal and the second data signal.

For example, when the RE may control the third switching switch to switch to a first state, the second multiplexed signal output by the third switching switch includes the second data signal. When the RE controls the third switching switch to switch to a second state, the second multiplexed signal output by the third switching switch includes the fourth analog clock signal. However, this application is not limited thereto.

In another implementation, the RE performs frequency division multiplexing on the fourth analog clock signal and the second data signal, and outputs the second multiplexed signal.

S250: The RE sends the second multiplexed signal to the REC.

Correspondingly, the RE receives the second multiplexed signal from the REC.

Optionally, the RE may modulate the second multiplexed signal to an optical carrier to obtain a second optical signal, and send the second optical signal to the REC.

Correspondingly, after receiving the second optical signal, the REC demodulates the second optical signal to obtain the second multiplexed signal.

S260: The REC demultiplexes the second multiplexed signal to obtain a first analog clock signal and the second data signal.

The first analog clock signal is an analog signal. The second multiplexed signal received by the REC is the second multiplexed signal that goes through a transmission delay between the RE and the REC. The first analog clock signal is the fourth analog clock signal that goes through a transmission delay between the RE and the REC. That is, the first analog clock signal is a clock signal obtained after the local analog clock signal of the REC goes through the transmission delay between the REC and the RE and the transmission delay between the RE and the REC.

S270: The REC determines a first signal based on the first analog clock signal and the third analog clock signal.

The REC may determine a path transmission delay based on a delay value between the first analog clock signal and the third analog clock signal (that is, the local analog clock signal), to obtain a delay compensation amount. Alternatively, the REC may perform delay compensation on the local analog clock signal based on the path transmission delay, to obtain the second analog clock signal. In other words, the second analog clock signal is a clock signal obtained through delay compensation is performed on the local analog clock signal. The first signal is the delay compensation amount or the second analog clock signal.

In an implementation, the REC may calculate a phase offset between the first analog clock signal and the local analog clock signal, and determine the path transmission delay based on the phase offset.

For example, the REC determines a loop (that is, from the REC to the RE and from the RE to the REC) transmission delay value ΔT₁ based on the phase offset between the first analog clock signal and the local analog clock signal, obtains a single-path transmission delay value about ΔT₁/2 based on ΔT₁, and advances time of the local analog clock signal by ΔT₁/2 to obtain the second analog clock signal. However, this application is not limited thereto.

In another implementation, the REC may determine the delay compensation amount between the first analog clock signal and the local analog clock signal in a symmetric dual mixer time difference measurement manner.

For example, the REC performs frequency conversion on the first analog clock signal and the local analog clock signal respectively by using a same frequency to obtain low frequency signals of the two clock signals. To be specific, after phases of the first analog clock signal and the local analog clock signal are amplified based on the first proportion, an amplified phase offset between the phase-amplified first analog clock signal and the local analog clock signal is calculated, and then the amplified phase offset is reduced based on a first proportion to obtain a relatively precise phase offset between the first analog clock signal and the local analog clock signal. A loop transmission delay value ΔT₂ is determined based on the phase offset, the single-path transmission delay value is determined to be approximately ΔT₂/2, and the single-path transmission delay value ΔT₂/2 is used as the delay compensation amount. However, this application is not limited thereto. According to the foregoing solution, a more accurate path delay can be measured by using a symmetric dual mixer time difference measurement manner, and synchronization precision can be improved.

S280: The REC processes data based on the first signal to obtain the first data signal by performing delay compensation.

The REC obtains the first signal based on the first analog clock signal in S270. The REC may process data based on the first signal, to advance a clock of the first data signal to be sent by the REC to the RE, that is, obtain the first data signal by performing delay compensation after processing. The first data signal by performing delay compensation can be synchronized with the clock of the REC after arriving at the RE through a transmission delay between the REC and the RE.

For example, in a case in which the first signal is the delay compensation amount, the REC may process data based on the delay compensation amount and the local analog clock signal, to advance the clock of the first data signal to be sent by the REC to the RE, or the REC processes the first data signal based on the second analog clock signal, so that the first data signal obtained through delay compensation is synchronized with the clock of the REC after the first data signal arrives at the RE after a transmission delay from the REC to the RE. However, this application is not limited thereto.

According to the foregoing solution, the REC multiplexes the local analog clock signal and the to-be-sent data signal, and then transmits the multiplexed signal to the RE. Then, the RE feeds back the received clock signal to the REC. Therefore, the local analog clock signal of the REC returns to the REC after going through a loop transmission delay. The REC compensates the local analog clock signal after determining the single-path delay value, and processes the data signal by using the compensated clock signal, so that the data signal is synchronized with the clock of the REC when being transmitted to the RE. The REC may cyclically multiplex the local analog clock signal and the to-be-sent data signal, for example, periodically multiplex the local analog clock signal and the to-be-sent data signal, and periodically correct the loop delay. This improves accuracy of data signal delay compensation, and implements adaptation of link delay compensation.

This solution enables the REC to perform system coordination and reduce interference between signals of a plurality of REs. This can reduce a deviation of clock synchronization caused by uncertainty of a delay of loading and unloading a digital timestamp, and improve precision of clock synchronization.

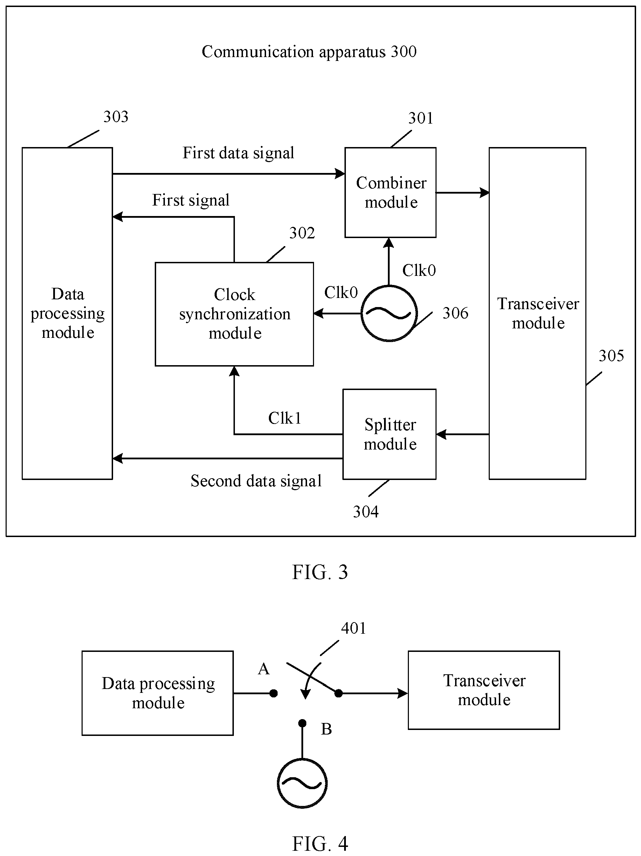

The foregoing describes the clock synchronization method provided in embodiments of this application with reference to FIG. 2. The following describes a communication apparatus provided in embodiments of this application with reference to FIG. 3.

FIG. 3 is a schematic block diagram of a communication apparatus 300 according to an embodiment of this application.

In a possible design, the communication apparatus 300 may correspond to the REC in the foregoing method embodiment, or a chip configured in (or used in) the REC. The communication apparatus 300 may perform corresponding operations or steps performed by the REC in the method 200 in embodiments of this application.

As shown in FIG. 3, the communication apparatus 300 may include a combiner module 301, a clock synchronization module 302, a data processing module 303, a splitter module 304, a transceiver module 305, and a local oscillator 306.

In the communication apparatus 300, the combiner module is separately connected to the data processing module, the local oscillator, and the transceiver module. The combiner module is configured to: combine a local analog clock signal (for example, Clk0 in FIG. 3) from the local oscillator and a first data signal from the data processing module to obtain a first multiplexed signal, and output the first multiplexed signal to the transceiver module.

In a possible design, the combiner module is a first switching switch, and is configured to perform time division multiplexing on the local analog clock signal and the first data signal to obtain the first multiplexed signal. When the first switching switch switches to a first state, the first switching switch outputs the first data signal input by the data processing module. When the first switching switch switches to a second state, the first switching switch outputs the local analog clock signal. For example, the first switching switch is a single-pole double-throw switch 401 shown in FIG. 4. When the first switching switch switches to the first state, that is, the first switching switch is connected to a connection point A, the first multiplexed signal output by the switching switch to the transceiver module includes the first data signal. When the first switching switch switches to the second state, that is, the first switching switch is connected to a connection point B, the first multiplexed signal output by the switching switch to the transceiver module includes the local analog clock signal. However, this application is not limited thereto.

In another possible design, the combiner module is a power splitter combiner, and is configured to perform frequency division multiplexing on the local analog clock signal and the first data signal to obtain the first multiplexed signal.

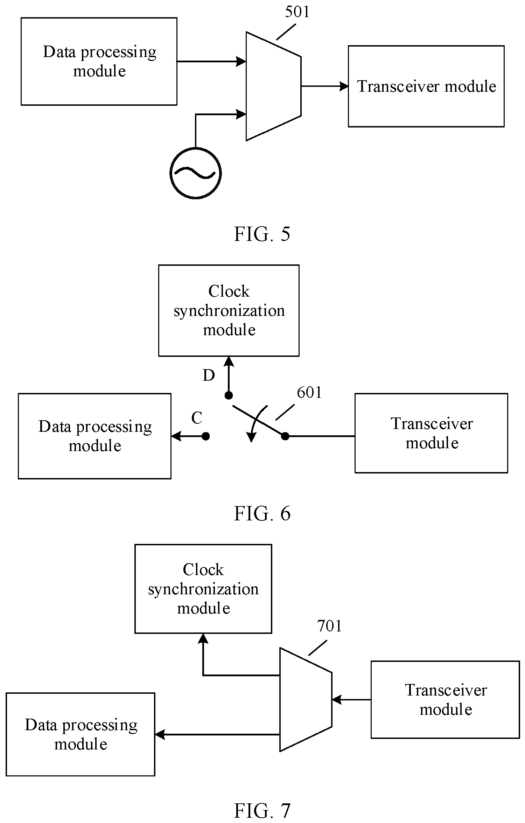

For example, the combiner module is a power splitter combiner 501 in FIG. 5, and outputs the first multiplexed signal to the transceiver module after frequency division multiplexing is performed on the local analog clock signal from the local oscillator and the first data signal from the data processing module. The first data signal and the local analog clock signal may be carried on different frequency band resources of the first multiplexed signal. However, this application is not limited thereto.

The transceiver module is connected to the combiner module and the splitter module. The transceiver module is configured to send the first multiplexed signal to a first apparatus (for example, the first apparatus may be an RE or the first apparatus is configured on an RE, but this application is not limited thereto). In addition, the transceiver module is further configured to receive a second multiplexed signal from the first apparatus, and output the second multiplexed signal to the splitter module.

Optionally, an electrical signal may be transmitted between the communication apparatus 300 and the first apparatus. For example, the communication apparatus 300 is connected to the first apparatus through a cable. Alternatively, an optical signal may be transmitted between the communication apparatus 300 and the first apparatus. For example, the communication apparatus 300 is connected to the first apparatus through an optical fiber.

Optionally, the transceiver module includes an electro-optic modulation unit, a photoelectric detection unit, and a transceiver unit, where that the transceiver module is configured to send the first multiplexed signal to the first apparatus includes:
The electro-optic modulation unit is configured to modulate the first multiplexed signal to an optical carrier to obtain a first optical signal, and output the first optical signal to the transceiver unit; and
the transceiver unit is configured to send the first optical signal to the first apparatus, where the first optical signal includes the first multiplexed signal.

That the transceiver module is further configured to receive a second multiplexed signal from the first apparatus includes:
the transceiver unit is further configured to receive a second optical signal from the first apparatus, where the second optical signal includes the second multiplexed signal; and
the photoelectric detection unit is configured to demodulate the second optical signal to obtain the second multiplexed signal.

Optionally, the electro-optic modulation unit may be an electro-optic modulator. The electro-optic modulator is configured to modulate the first multiplexed signal to the optical carrier to obtain the first optical signal, where the first optical signal includes the first multiplexed signal. In addition, the photoelectric detection unit may be a photoelectric converter, configured to demodulate the second optical signal (the second optical signal includes the second multiplexed signal) from the first apparatus to obtain the second multiplexed signal.

For example, after the electro-optic modulator in the transceiver module modulates an amplitude and a phase of the first multiplexed signal to the optical carrier to obtain the first optical signal, the transceiver module sends the first optical signal to the first apparatus. After the transceiver module receives the second optical signal from the first apparatus, an optical-to-electrical converter in the transceiver module demodulates the amplitude and the phase of the second optical signal, and converts the second optical signal into an electrical signal, that is, the second multiplexed signal. The transceiver module outputs the second multiplexed signal to the splitter module. However, this application is not limited thereto.

In the communication apparatus 300, the splitter module is connected to the transceiver module, the clock synchronization module, and the data processing module. The splitter module is configured to split the second multiplexed signal to obtain a second data signal and a first analog clock signal (for example, Clk1 in FIG. 3), output the first analog clock signal to the clock synchronization module, and output the second data signal to the data processing module.

In a possible design, the second multiplexed signal from the first apparatus is a time division multiplexed signal. The splitter module is a second switching switch and is configured to perform time division multiplexing on the local analog clock signal and the first data signal to obtain the first multiplexed signal. When the second switching switch switches to a third state, the second switching switch outputs the second data signal to the data processing module. When the second switching switch switches to a fourth state, the second switching switch outputs the first analog clock signal to the clock synchronization module.

For example, the second switching switch is a single-pole double-throw switch 601 shown in FIG. 6. When the second switching switch switches to the third state, that is, the second switching switch is connected to a connection point C, the switching switch outputs the second data signal in the second multiplexed signal to the data processing module. When the second switching switch switches to the fourth state, that is, the second switching switch is connected to a connection point D, the switching switch outputs the first analog clock signal in the second multiplexed signal to the clock synchronization module. However, this application is not limited thereto.

In another possible design, the second multiplexed signal from the first apparatus is a frequency division multiplexed signal. The splitter module is a power splitter, configured to perform frequency division demultiplexing on the second multiplexed signal to obtain the first analog clock signal and the second data signal.

For example, the splitter module is a power splitter 701 in FIG. 7, and performs frequency division demultiplexing on the second multiplexed signal to obtain the first analog clock signal and the second data signal. In addition, the power splitter 701 outputs the first analog clock signal to the clock synchronization module, and outputs the second data signal to the data processing module. However, this application is not limited thereto.

In the communication apparatus 300, the clock synchronization module is connected to the splitter module, the local oscillator, and the data processing module. The clock synchronization module is configured to: obtain a first signal (as shown in FIG. 3) based on the first analog clock signal input by the splitter module and the local analog clock signal input by the local oscillator, and output the first signal to the data processing module.

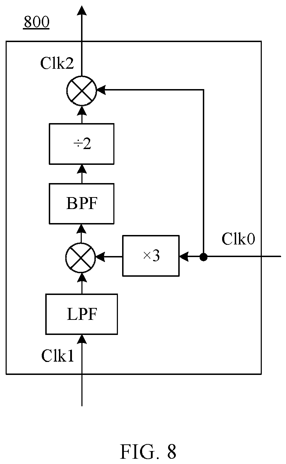

For example, FIG. 8 is a schematic diagram of a structure of the clock synchronization module according to an embodiment of this application. The clock synchronization module first obtains a loop transmission delay value through calculation based on a first analog clock signal Clk1 and a local analog clock signal Clk0, and then obtains a single-path transmission delay value. Then, the clock synchronization module compensates Clk0 based on the single-path transmission delay value to obtain a second analog clock signal Clk2 (that is, the first signal is the second analog clock signal), and outputs Clk2 as the first signal in the foregoing embodiment to the data processing module. Specifically, after passing through a low-pass filter (low-pass filter, LPF), the signal Clk1 obtained through demultiplexing is mixed with Clk0 of three times the frequency to obtain a frequency mixing delay signal of two times the frequency. After passing through a band-pass filter (band-pass filter, BPF) and performing frequency reduction on the frequency mixing delay signal, Clk0 is compensated to obtain Clk2. However, this application is not limited thereto.

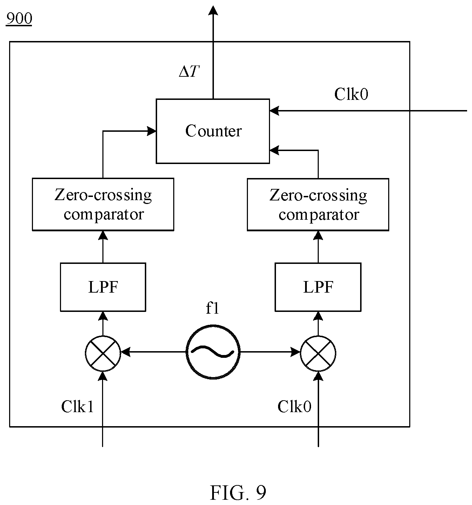

For another example, FIG. 9 is another schematic diagram of a structure of the clock synchronization module according to an embodiment of this application. The clock synchronization module obtains the transmission delay by using symmetric dual mixer time difference measurement. For example, after the clock synchronization module performs frequency conversion on Clk1 and Clk0 respectively by using a frequency f1, the converted Clk1 and the converted Clk0 respectively pass through a zero-crossing comparator to obtain a data signal. A delay value between Clk1 and Clk0 is calculated to obtain a single-path delay value Δ*T*, and the single-path delay value Δ*T* is used as a delay compensation amount. The clock synchronization module outputs the delay compensation amount Δ*T* as the first signal in the foregoing embodiment to the data processing module. However, this application is not limited thereto.

Still refer to FIG. 3. In the communication apparatus 300, the data processing module is separately connected to the clock synchronization module, the splitter module, and the combiner module. The data processing module is configured to obtain, based on the first signal processing data input by the clock synchronization module, the first data signal by performing delay compensation.

In an implementation, the first signal is the second analog clock signal, and the data processing module processes data based on the second analog clock signal, so that a clock of the to-be-sent first data signal is advanced, that is, the first data signal obtained through delay compensation is obtained through processing.

After delay compensation, the first data signal is synchronized with a clock of the REC after arriving at the RE through a transmission delay from the REC to the RE.

In another implementation, the first signal is the delay compensation amount, and the data processing module may process data based on the delay compensation amount and the local analog clock signal, so that a clock of the to-be-sent first data signal is advanced, to obtain the first data signal by performing delay compensation.

The first data signal processed by the data processing module can overcome a transmission delay from the communication apparatus 300 to the first apparatus, so that the first data signal is synchronized with a clock of the communication apparatus 300 when arriving at the first apparatus. The first data signal obtained through delay compensation is input to the combiner module and multiplexed with the local analog clock signal to obtain the first multiplexed signal. The communication apparatus 300 cyclically multiplexes the local analog clock signal and the to-be-sent data signal, for example, periodically multiplexes the local analog clock signal and the to-be-sent data signal, and periodically corrects the loop delay. This improves accuracy of data signal delay compensation, and implements adaptation of link delay compensation.

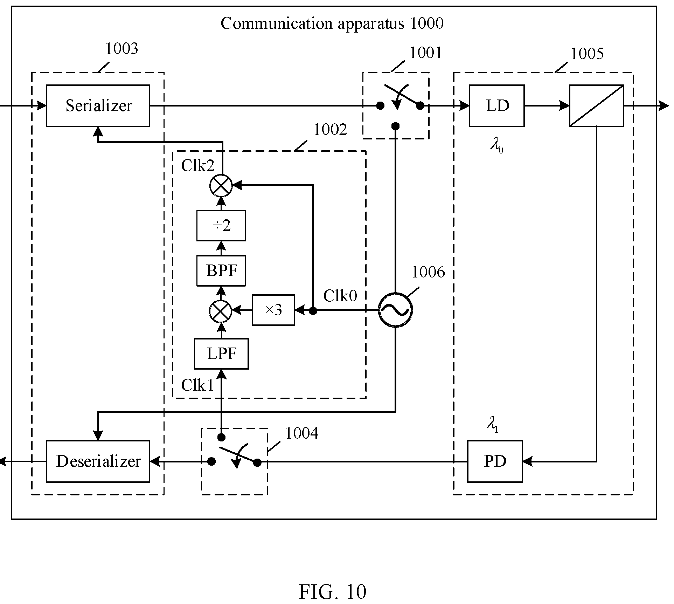

In an example, FIG. 10 is a schematic block diagram of a communication apparatus 1000 according to an embodiment of this application. The communication apparatus 1000 includes a combiner module 1001 (that is, a first switching switch), a clock synchronization module 1002, and a data processing module 1003. The data processing module includes a serializer for processing to-be-sent data and a deserializer for processing received data. The communication apparatus 1000 includes a splitter module 1004 (that is, a second switching switch) and a transceiver module 1005. The transceiver module includes an electro-optic modulation unit, a photoelectric detection unit, and a transceiver. The electro-optic modulation unit may be a laser generator, for example, a laser diode (laser diode, LD), and the photoelectric detection unit may be a photo detector (photo diode, PD). However, this application is not limited thereto. The LD may convert a first multiplexed signal into a first optical signal by using the LD, where the first optical signal includes the first multiplexed signal. The communication apparatus 1000 sends the first optical signal to a first apparatus through the transceiver. In addition, the PD may perform optical-to-electrical conversion on a second optical signal received by the transceiver from the first apparatus to obtain a second multiplexed signal. However, this application is not limited thereto.

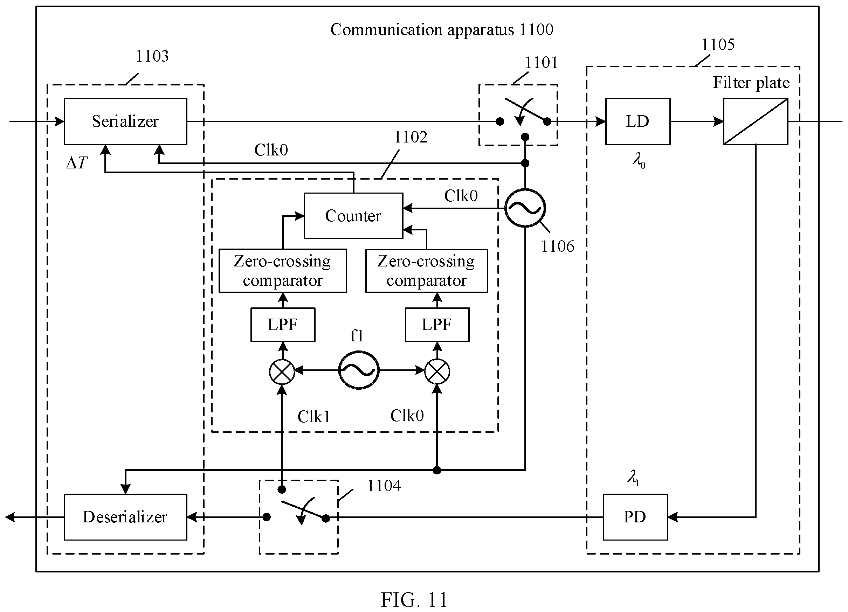

In another example, FIG. 11 is a schematic block diagram of a communication apparatus 1100 according to an embodiment of this application. The communication apparatus 1100 includes a combiner module 1101 (that is, a first switching switch), a clock synchronization module 1102, a data processing module 1103, a splitter module 1104 (that is, a second switching switch), and a transceiver module 1105. The clock synchronization module 1102 obtains a transmission delay value by using a symmetric dual mixer time difference measurement manner. For other modules that are the same as those of the communication apparatus in FIG. 10, refer to the foregoing descriptions. Details are not described herein again.

It should be noted that, in the communication apparatuses shown in FIG. 10 and FIG. 11, the combiner module may be replaced with the power splitter combiner shown in FIG. 5, and the splitter module may be replaced with the power splitter shown in FIG. 7. However, this application is not limited thereto.

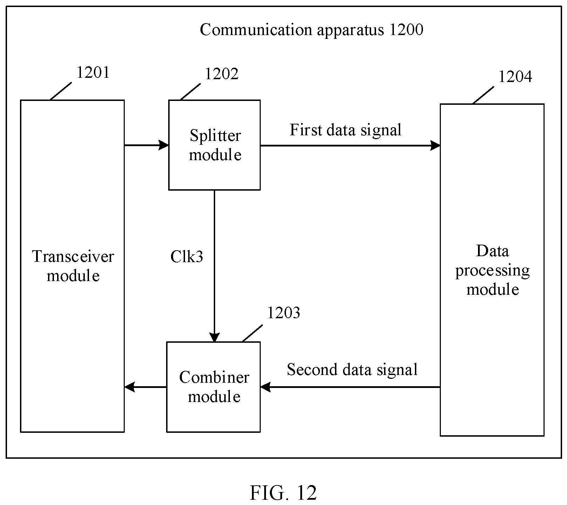

FIG. 12 is a schematic block diagram of a communication apparatus 1200 according to an embodiment of this application.

In a possible design, the communication apparatus 1200 may correspond to the RE in the foregoing method embodiments, or a chip configured in (or used in) the RE. The communication apparatus 300 may perform corresponding operations or steps performed by the RE in the method 200 in embodiments of this application.

As shown in FIG. 12, the communication apparatus 300 may include a transceiver module 1201, a splitter module 1202, a combiner module 1203, and a data processing module 1204.

The transceiver module is configured to receive a first multiplexed signal from a second apparatus (for example, an REC or an apparatus configured in the REC), and output the first multiplexed signal to the splitter module.

The splitter module is configured to split the first multiplexed signal to obtain a first data signal and a fourth analog clock signal, and output the fourth analog clock signal to the combiner module. In a possible design, the splitter module is specifically configured to perform time division demultiplexing on the first multiplexed signal, and output the first data signal and the fourth analog clock signal.

Optionally, the splitter module includes a fourth switching switch. When the fourth switching switch switches to a third state, the fourth switching switch outputs the first data signal to the data processing module. When the fourth switching switch switches to a fourth state, the fourth switching switch outputs the fourth analog clock signal to the combiner module.

In another possible design, the splitter module is specifically configured to perform frequency division demultiplexing on the first multiplexed signal and output the first data signal and the first analog clock signal.

The combiner module is configured to combine the fourth analog clock signal and a second data signal from the data processing module to obtain a second multiplexed signal, and output the second multiplexed signal to the transceiver module. The transceiver module is further configured to send the second multiplexed signal to the second apparatus.

In a possible design, the combiner module is specifically configured to perform time division multiplexing on the fourth analog clock signal and the second data signal, and output the second multiplexed signal.

Optionally, the combiner module includes a third switching switch. When the third switching switch switches to a first state, the third switching switch outputs the second data signal input by the data processing module. When the third switching switch switches to a second state, the third switching switch outputs the fourth analog clock signal input by the splitter module.

In another possible design, the combiner module is specifically configured to perform frequency division multiplexing on the first analog clock signal and the second data signal, and output the second multiplexed signal.

Optionally, the transceiver module includes an electro-optic modulation unit, a photoelectric detection unit, and a transceiver unit. That the transceiver module is configured to receive a first multiplexed signal from a second apparatus includes:
The transceiver unit is configured to receive a first optical signal from the second apparatus, where the first optical signal includes the first multiplexed signal; and
the photoelectric detection unit is configured to demodulate the first optical signal to obtain the first multiplexed signal.

That the transceiver module is configured to send the second multiplexed signal to the second apparatus includes:
The electro-optic modulation unit is configured to modulate the second multiplexed signal to an optical carrier to obtain a second optical signal, and output the second optical signal to the transceiver unit; and
the transceiver unit is further configured to send the second optical signal to the second apparatus, where the second optical signal includes a second multiplexed signal.

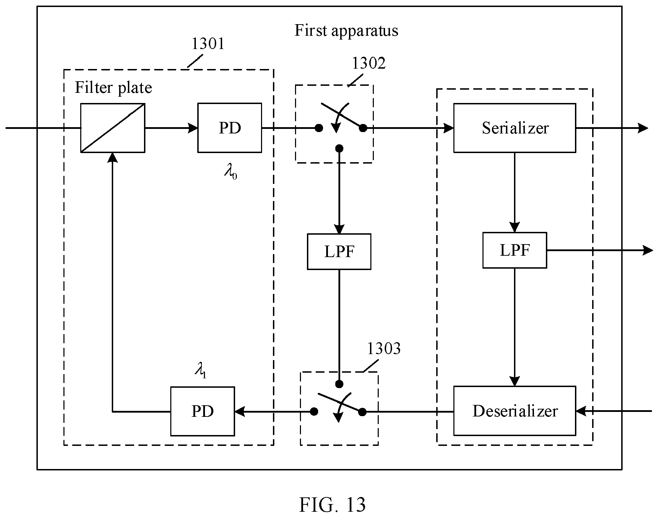

For example, FIG. 13 is a schematic diagram of a structure of a communication apparatus 1300 according to an embodiment of this application. The communication apparatus 1300 includes a transceiver module 1301 that may convert a received optical signal into an electrical signal, and convert a to-be-sent electrical signal into an optical signal. A splitter module 1302, that is, a third switching switch, is configured to perform time division demultiplexing on the first multiplexed signal to obtain a first analog clock signal and a first data signal. If the first data signal is obtained through delay compensation on a second apparatus, or is obtained by a clock of the second apparatus by performing delay compensation, the first data signal is synchronized with the clock of the second apparatus. The splitter module 1302 outputs the first analog clock signal to a combiner module 1303 (optionally, the first analog clock signal may be input to the combiner module 1303 after LPF filtering). The combiner module 1303 multiplexes the first analog clock signal and the second data signal to obtain a second multiplexed signal, and outputs the second multiplexed signal to the transceiver module 1301. However, this application is not limited thereto.

According to the method provided in embodiments of this application, this application further provides a system, including the foregoing one or more second apparatuses. The system may further include the foregoing one or more first apparatuses.

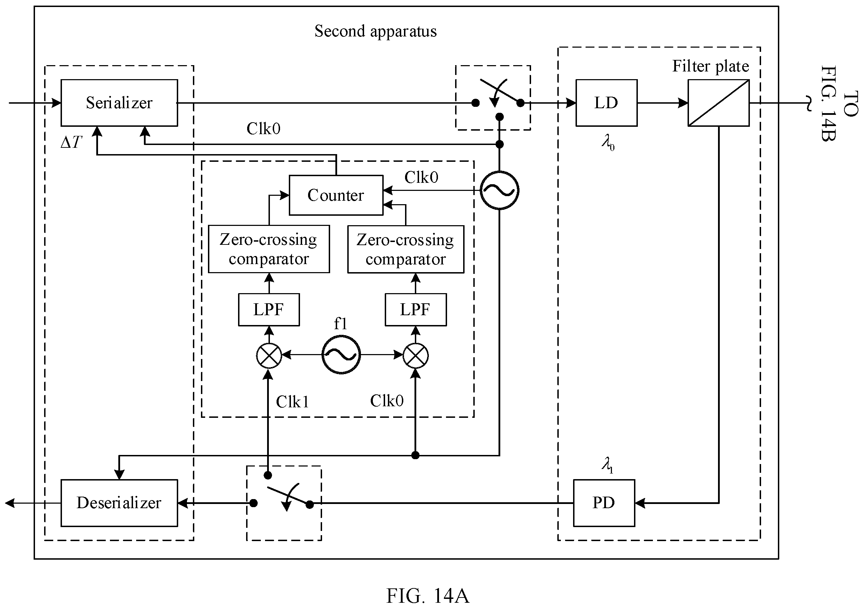

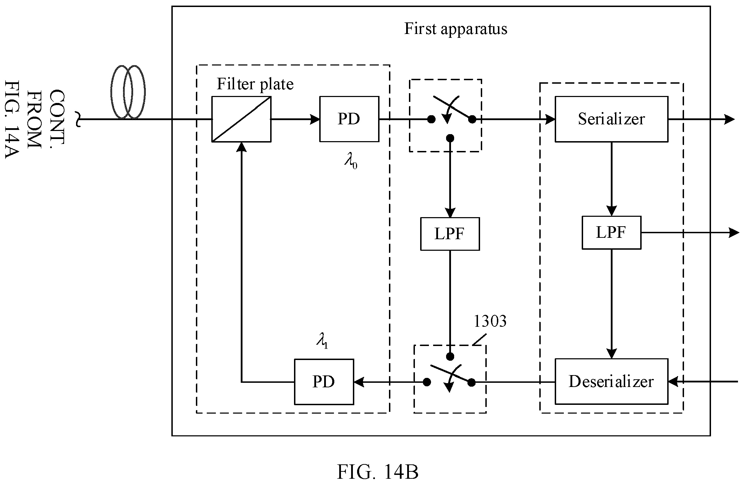

FIG. 14A and FIG. 14B are another schematic diagram of a communication system according to an embodiment of this application. The communication system includes a first apparatus and a second apparatus. The first apparatus may be an RE or an apparatus or a chip configured in the RE. The second apparatus may be an REC or an apparatus or a chip configured in the REC. The first apparatus and the second apparatus may communicate with each other through an optical fiber. For example, a first optical signal carrying a first multiplexed signal and a second optical signal carrying a second multiplexed signal may be transmitted through the optical fiber. However, this application is not limited thereto.

According to the methods provided in embodiments of this application, this application further provides a computer program product. The computer program product includes computer program code. When the computer program code is executed by one or more processors, an apparatus including the processor is enabled to perform the method in the embodiment shown in FIG. 2. According to the methods provided in embodiments of this application, this application further provides a computer-readable storage medium. The computer-readable storage medium stores program code. When the program code is executed by one or more processors, an apparatus including the processor is enabled to perform the method in the embodiment shown in FIG. 2. Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In embodiments of this application, when there is no logical conflict, embodiments may be mutually referenced. For example, methods and/or terms in the method embodiments may be mutually referenced, and functions and/or terms in the apparatus embodiments may be mutually referenced. For example, functions and/or terms between the apparatus embodiments and the method embodiments may be mutually referenced.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication apparatus, comprising a combiner module, an oscillator, a clock synchronization module, a data processing module, a splitter module, and a transceiver module, wherein
the combiner module is configured to combine a third analog clock signal from the oscillator and a first data signal from the data processing module to obtain a first multiplexed signal, and output the first multiplexed signal to the transceiver module;
the transceiver module is configured to send the first multiplexed signal to a first apparatus;
the transceiver module is further configured to receive a second multiplexed signal from the first apparatus, and output the second multiplexed signal to the splitter module;
the splitter module is configured to split the second multiplexed signal to obtain a second data signal and a first analog clock signal, and output the first analog clock signal to the clock synchronization module, wherein the first analog clock signal is the third analog clock signal that goes through a transmission delay;
the clock synchronization module is configured to obtain a first signal based on the first analog clock signal and the third analog clock signal from the oscillator, and output the first signal to the data processing module, wherein the first signal is a second analog clock signal or a delay compensation amount between the first analog clock signal and the third analog clock signal, and the second analog clock signal is the third analog clock signal obtained through delay compensation; and
the data processing module is configured to process data based on the first signal to obtain the first data signal obtained through delay compensation.

2. The apparatus according to claim 1, wherein the transceiver module comprises an electro-optic modulation unit, a photoelectric detection unit, and a transceiver unit;
that the transceiver module is configured to send the first multiplexed signal to a first apparatus comprises:
the electro-optic modulation unit is configured to modulate the first multiplexed signal to an optical carrier to obtain a first optical signal, and output the first optical signal to the transceiver unit; and
the transceiver unit is configured to send the first optical signal to the first apparatus, wherein the first optical signal comprises the first multiplexed signal; and
that the transceiver module is further configured to receive a second multiplexed signal from the first apparatus comprises:
the transceiver unit is further configured to receive a second optical signal from the first apparatus, wherein the second optical signal comprises the second multiplexed signal; and
the photoelectric detection unit is configured to demodulate the second optical signal to obtain the second multiplexed signal.

3. The apparatus according to claim 1 or 2, wherein the combiner module is specifically configured to perform time division multiplexing on the third analog clock signal and the first data signal, and output the first multiplexed signal.

4. The apparatus according to claim 3, wherein the combiner module comprises a first switching switch; and
when the first switching switch switches to a first state, the first multiplexed signal output by the first switching switch comprises the first data signal; or
when the first switching switch switches to a second state, the first multiplexed signal output by the first switching switch comprises the third analog clock signal.

5. The apparatus according to any one of claims 1 to 4, wherein the splitter module is specifically configured to perform time division demultiplexing on the second multiplexed signal, and output the second data signal and the first analog clock signal.

6. The apparatus according to claim 5, wherein the splitter module comprises a second switching switch; and
when the second switching switch switches to a third state, the second switching switch outputs the second data signal in the second multiplexed signal to the data processing module; or
when the second switching switch switches to a fourth state, the second switching switch outputs the first analog clock signal in the second multiplexed signal to the clock synchronization module.

7. The apparatus according to claim 1 or 2, wherein the combiner module is specifically configured to perform frequency division multiplexing on the third analog clock signal and the first data signal, and output the first multiplexed signal; and/or
the splitter module is specifically configured to perform frequency division demultiplexing on the second multiplexed signal, and output the second data signal and the first analog clock signal.

8. The apparatus according to any one of claims 1 to 7, wherein the clock synchronization module determines the delay compensation amount between the first analog clock signal and the third analog clock signal in a symmetric dual mixer time difference measurement manner.

9. A communication apparatus, comprising a transceiver module, a splitter module, a combiner module, and a data processing module, wherein
the transceiver module is configured to receive a first multiplexed signal from a second apparatus, and output the first multiplexed signal to the splitter module;
the splitter module is configured to split the first multiplexed signal to obtain a first data signal and a fourth analog clock signal, and output the fourth analog clock signal to the combiner module;
the combiner module is configured to combine the fourth analog clock signal and a second data signal from the data processing module to obtain a second multiplexed signal, and output the second multiplexed signal to the transceiver module; and
the transceiver module is further configured to send the second multiplexed signal to the second apparatus.

10. The apparatus according to claim 9, wherein the transceiver module comprises an electro-optic modulation unit, a photoelectric detection unit, and a transceiver unit;
that the transceiver module is configured to receive a first multiplexed signal from a second apparatus comprises:
the transceiver unit is configured to receive a first optical signal from the second apparatus, wherein the first optical signal comprises the first multiplexed signal; and
the photoelectric detection unit is configured to demodulate the first optical signal to obtain the first multiplexed signal; and
that the transceiver module is further configured to send the second multiplexed signal to the second apparatus comprises:
the electro-optic modulation unit is configured to modulate the second multiplexed signal to an optical carrier to obtain a second optical signal, and output the second optical signal to the transceiver unit; and
the transceiver unit is further configured to send the second optical signal to the second apparatus, wherein the second optical signal comprises the second multiplexed signal.

11. The apparatus according to claim 9 or 10, wherein the combiner module is specifically configured to perform time division multiplexing on the fourth analog clock signal and the second data signal, and output the second multiplexed signal.

12. The apparatus according to claim 11, wherein the combiner module comprises a third switching switch; and
when the third switching switch switches to a first state, the second multiplexed signal output by the third switching switch comprises the second data signal; or
when the third switching switch switches to a second state, the second multiplexed signal output by the third switching switch comprises the fourth analog clock signal.

13. The apparatus according to any one of claims 9 to 11, wherein the splitter module is specifically configured to perform time division demultiplexing on the first multiplexed signal, and output the first data signal and the fourth analog clock signal.

14. The apparatus according to claim 13, wherein the splitter module comprises a fourth switching switch; and
when the fourth switching switch switches to a third state, the fourth switching switch outputs the first data signal in the first multiplexed signal to the data processing module; or
when the fourth switching switch switches to a fourth state, the fourth switching switch outputs the fourth analog clock signal in the first multiplexed signal to the combiner module.

15. The apparatus according to claim 9 or 10, wherein the splitter module is specifically configured to perform frequency division demultiplexing on the first multiplexed signal, and output the first data signal and the fourth analog clock signal; and/or
the combiner module is specifically configured to perform frequency division multiplexing on the fourth analog clock signal and the second data signal, and output the second multiplexed signal.

16. A communication method, comprising:
multiplexing a third analog clock signal and a first data signal to obtain a first multiplexed signal;
sending the first multiplexed signal to a first apparatus;
receiving a second multiplexed signal from the first apparatus;
demultiplexing the second multiplexed signal to obtain a second data signal and a first analog clock signal, wherein the first analog clock signal is the third analog clock signal that goes through a transmission delay;
obtaining a first signal based on the first analog clock signal, wherein the first signal is a delay compensation amount or a second analog clock signal, and the second analog clock signal is the third analog clock signal obtained through delay compensation; and
processing data based on the first signal to obtain the first data signal obtained through delay compensation.

17. The method according to claim 16, wherein the sending the first multiplexed signal to a first apparatus comprises:
modulating the first multiplexed signal to an optical carrier to obtain a first optical signal; and
sending the first optical signal to the first apparatus, wherein the first optical signal comprises the first multiplexed signal; and
the receiving a second multiplexed signal from the first apparatus comprises:
receiving a second optical signal from the first apparatus, wherein the second optical signal comprises the second multiplexed signal; and
demodulating the second optical signal to obtain the second multiplexed signal.

18. The method according to claim 16 or 17, wherein the multiplexing a third analog clock signal and a first data signal to obtain a first multiplexed signal comprises:
performing time division multiplexing on the third analog clock signal and the first data signal to obtain the first multiplexed signal.

19. The method according to claim 18, wherein the performing time division multiplexing on the third analog clock signal and the first data signal to obtain the first multiplexed signal comprises:
when a first switching switch is controlled to switch to a first state, the first multiplexed signal output by the first switching switch comprises the first data signal; or
when the first switching switch is controlled to switch to a second state, the first multiplexed signal output by the first switching switch comprises the third analog clock signal.

20. The method according to any one of claims 16 to 19, wherein the demultiplexing the second multiplexed signal to obtain a second data signal and a first analog clock signal comprises:
performing time division demultiplexing on the second multiplexed signal, and outputting the second data signal and the first analog clock signal.

21. The method according to claim 20, wherein the performing time division demultiplexing on the second multiplexed signal, and outputting the second data signal and the first analog clock signal comprises:
when a second switching switch is controlled to switch to a third state, outputting, by the second switching switch, the second data signal in the second multiplexed signal; or
when the second switching switch is controlled to switch to a fourth state, outputting, by the second switching switch, the first analog clock signal in the second multiplexed signal.

22. The method according to claim 16 or 17, wherein
the multiplexing a third analog clock signal and a first data signal to obtain a first multiplexed signal comprises: performing frequency division multiplexing on the third analog clock signal and the first data signal to output the first multiplexed signal; and/or
the demultiplexing the second multiplexed signal to obtain a second data signal and a first analog clock signal comprises: performing frequency division demultiplexing on the second multiplexed signal, and outputting the second data signal and the first analog clock signal.

23. The method according to any one of claims 16 to 22, wherein the performing delay compensation on the third analog clock signal based on the first analog clock signal, and outputting the first signal comprises:
determining the delay compensation amount between the first analog clock signal and the third analog clock signal in a symmetric dual mixer time difference measurement manner.

24. A communication method, comprising:
receiving a first multiplexed signal from a second apparatus;
demultiplexing the first multiplexed signal to obtain a first data signal and a fourth analog clock signal;
multiplexing the fourth analog clock signal and a second data signal to obtain a second multiplexed signal; and
sending the second multiplexed signal to the second apparatus.

25. The method according to claim 24, wherein
the receiving a first multiplexed signal from a second apparatus comprises:
receiving a first optical signal from the second apparatus, wherein the first optical signal comprises the first multiplexed signal; and
demodulating the first optical signal to obtain the first multiplexed signal; and
the sending the second multiplexed signal to the second apparatus comprises:
modulating the second multiplexed signal to an optical carrier to obtain a second optical signal; and
sending the second optical signal to the second apparatus, wherein the second optical signal comprises the second multiplexed signal.

26. The method according to claim 24 or 25, wherein the multiplexing the fourth analog clock signal and a second data signal to obtain a second multiplexed signal comprises:
performing time division multiplexing on the fourth analog clock signal and the second data signal, and outputting the second multiplexed signal.

27. The method according to claim 26, wherein the performing time division multiplexing on the fourth analog clock signal and the second data signal, and outputting the second multiplexed signal comprises:
when a third switching switch is controlled to switch to a first state, the second multiplexed signal output by the third switching switch comprises the second data signal; or
when the third switching switch is controlled to switch to a second state, the second multiplexed signal output by the third switching switch comprises the fourth analog clock signal.

28. The method according to any one of claims 24 to 26, wherein the demultiplexing the first multiplexed signal to obtain a first data signal and a fourth analog clock signal comprises:
performing time division demultiplexing on the first multiplexed signal to obtain the first data signal and the fourth analog clock signal.

29. The method according to claim 28, wherein the performing time division demultiplexing on the first multiplexed signal to obtain the first data signal and the fourth analog clock signal comprises:
when a fourth switching switch is controlled to switch to a third state, outputting, by the fourth switching switch, the first data signal in the first multiplexed signal; or
when the fourth switching switch switches to a fourth state, outputting, by the fourth switching switch, the fourth analog clock signal in the first multiplexed signal.

30. The method according to claim 24 or 25, wherein
the demultiplexing the first multiplexed signal to obtain a first data signal and a fourth analog clock signal comprises:
performing frequency division demultiplexing on the first multiplexed signal, and outputting the first data signal and the fourth analog clock signal; and
the multiplexing the fourth analog clock signal and a second data signal to obtain a second multiplexed signal comprises:
performing frequency division multiplexing on the fourth analog clock signal and the second data signal, and outputting the second multiplexed signal.

31. A communication system, comprising the communication apparatus according to any one of claims 1 to 8 and the communication apparatus according to any one of claims 9 to 15.
